(19) Europäisches Patentamt
European Patent Office
Office européen des brevets

(11) Veröffentlichungsnummer: **0 212 519**
**B1**

(12) **EUROPÄISCHE PATENTSCHRIFT**

(45) Veröffentlichungstag der Patentschrift: **02.08.89**

(51) Int. Cl.⁴: **C08F 210/02,** C08F 4/64

(21) Anmeldenummer: **86111049.2**

(22) Anmeldetag: **09.08.86**

(54) **Verfahren zum Herstellen von Copolymerisaten des Ethylens mittels eines Ziegler-Katalysatorsystems.**

(30) Priorität: **16.08.85 DE 3529239**

(43) Veröffentlichungstag der Anmeldung:
**04.03.87 Patentblatt 87/10**

(45) Bekanntmachung des Hinweises auf die Patenterteilung:
**02.08.89 Patentblatt 89/31**

(84) Benannte Vertragsstaaten:
**AT BE DE FR GB IT**

(56) Entgegenhaltungen:
**DE-A- 2 235 033**
**DE-A- 2 846 185**

(73) Patentinhaber: **BASF Aktiengesellschaft,**
**Carl-Bosch-Strasse 38, D-6700 Ludwigshafen(DE)**

(72) Erfinder: **Vogt, Heinz, Dr., Pranckhstrasse 30,**
**D-6700 Ludwigshafen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 212 519 B1

**Beschreibung**

Die vorliegende Erfindung liegt im Rahmen eines Verfahrens zum Herstellen von Homopolymerisaten des Ethylens sowie insbesondere Copolymerisaten des Ethylens mit untergeordneten Mengen an $C_3$- bis $C_8$-, insbesondere $C_4$- bis $C_6$-α-Monoolefinen durch Polymerisation des bzw. der Monomeren bei Temperaturen von 30 bis 200, insbesondere 50 bis 100°C, und Drücken von 1 bis 200, insbesondere 5 bis 60 bar, mittels eines Ziegler-Katalysatorsystems aus

(1) einer Titan enthaltenden Katalysatorkomponente und
(2) einer Aluminium enthaltenden Katalysatorkomponente der Formel
$AlR_3$,
worin steht
R für einen $C_1$- bis $C_{12}$-Kohlenwasserstoffrest, vorzugsweise eine $C_1$- bis $C_{12}$- und insbesondere eine $C_2$- bis $C_8$-Alkylgruppe,

mit den Maßgaben, daß (i) das Atomverhältnis Titan aus der Katalysatorkomponente (1) : Aluminium aus der Katalysatorkomponente (2) im Bereich von 1:5 bis 1:700, insbesondere 1:10 bis 1:500, liegt und (ii) als Titan enthaltende Katalysatorkomponente (1) eingesetzt wird das festphasige Produkt (VI), das erhalten worden ist, indem man

(1.1) zunächst
(1.1.1) einen feinteiligen, porösen, anorganisch-oxidischen Stoff (I), der einen Teilchendurchmesser von 1 bis 1.000, insbesondere 10 bis 400μm, ein Porenvolumen von 0,3 bis 3, insbesondere 1 bis 2,5 $cm^3/g$ sowie eine Oberfläche von 100 bis 1.000, insbesondere 200 bis 400 $m^2/g$ besitzt und die Formel $SiO_2.aAl_2O_3$ -worin a steht für eine Zahl im Bereich von 0 bis 2, insbesondere 0 bis 0,5 - hat, und
1.1.2) eine Lösung (II), wie sie sich ergibt beim Zusammenbringen von

(IIa) 100 Gew.-Teilen eines Alkohols der Formel
$R^1$ - OH,
worin steht
$R^1$ für einen gesättigten $C_1$- bis $C_8$-Kohlenwasserstoffrest, vorzugsweise einen gesättigten $C_1$- bis $C_6$-Kohlenwasserstoffrest, und insbesondere eine $C_1$- bis $C_4$-Alkylgruppe,
(IIb) 0,01 bis 6, insbesondere 0,04 bis 3,5 Gew.-Teilen (gerechnet als Titan) eines Titantrichlorids der Formel $TiCl_3.nAlCl_3$ - worin n steht für eine Zahl im Bereich von 0 bis 0,5, vorzugsweise 0,2 bis 0,4, und insbesondere 0,31 bis 0,35 -, sowie
(IIc) 0,01 bis 4, insbesondere 0,04 bis 2,5 Gew.-Teilen (gerechnet als Magnesium) Magnesiumchlorid ($MgCl_2$),

miteinander in Berührung bringt unter Bildung einer Dispersion (III), mit der Maßgabe, daß das Gewichtsverhältnis anorganisch-oxidischer Stoff (I) : Titan in dem Titantrichlorid (IIb) im Bereich von 1:0,01 bis 1:0,2 und das Gewichtsverhältnis anorganisch-oxidischer Stoff (I) : Magnesium in dem Magnesiumchlorid (IIc) im Bereich von 1:0,01 bis 1:0,25 liegt, die Dispersion (III) bei einer Temperatur, die unterhalb von 200, insbesondere unterhalb von 160°C, und oberhalb des Schmelzpunktes des verwendeten Alkohols (IIa) liegt, bis zur trockenen Konsistenz - Bildung eines festphasigen Zwischenproduktes (IV) - eindampft und

(1.2) dann
(1.2.1) das aus Stufe (1.1) erhaltene festphasige Zwischenprodukt (IV) und
(1.2.2) eine in einem inerten Kohlenwasserstoff gelöste Aluminiumkomponente (V), die neben Aluminium auch einen $C_1$- bis $C_{12}$-Kohlenwasserstoffrest, vorzugsweise eine $C_1$- bis $C_{12}$-, und insbesondere eine $C_2$- bis $C_8$-Alkylgruppe enthält,
miteinander in Berührung bringt unter Bildung einer Dispersion, wobei das dabei als Dispergiertes resultierende festphasige Produkt (VI) die Titan enthaltende Katalysatorkomponente (1) ist.

Polymerisationsverfahren dieser Art sind bekannt, wobei im gegebenen Zusammenhang als repräsentativ das in der GB-PS 1 601 418 beschriebene gelten kann.

Die genannte Verfahrensart hat - ebenso wie in Parallele zu setzende andere Verfahrensarten - zum Kernstück eine in besonderer Weise ausgestaltete Titan enthaltende Katalysatorkomponente (1).

Die besonderen Ausgestaltungen dieser Katalysatorkomponente (1) werden bekanntlich vorgenommen, um bestimmte Ziele zu erreichen, wie die folgenden:

(a) Katalysatorsysteme, die eine erhöhte Ausbeute an Polymerisat zu liefern vermögen, nämlich Katalysatorsysteme mit einer erhöhten Produktivität, d.h. Systeme, bei denen die Menge an gebildetem Polymerisat pro Gewichtseinheit Übergangsmetall der Katalysatorkomponente (1) erhöht ist.

(b) Katalysatorsysteme, durch die weniger bzw. kein Halogen in das Polymerisat eingebracht wird; - was zu erreichen ist, indem

($b_1$) die Ausbeute gemäß (a) gesteigert wird und/oder

($b_2$) Katalysatorkomponenten (1) eingesetzt werden, die kein Halogen enthalten.

(c) Katalysatorsysteme, die bei der Copolymerisation von Ethylen mit höheren $\alpha$-Monoolefinen zu Copolymerisaten mit deutlich abgesenkten Polymerdichten führen.

(d) Katalysatorsysteme, die es ermöglichen, bei der Polymerisation unter Einwirkung eines Molekulargewichtsreglers, wie insbesondere Wasserstoff, mit relativ geringen Mengen an Regler auszukommen; - was z.B. für die Thermodynamik der Verfahrensführung von Bedeutung sein kann.

(e) Katalysatorsysteme, die einfach und sicher herzustellen und gut handzuhaben sind; - z.B. solche, die sich in (inerten) Kohlenwasserstoff-Hilfsmedien zubereiten lassen.

(f) Katalysatorsysteme, die zu Polymerisaten, insbesondere Copolymerisaten von Ethylen mit höheren $\alpha$-Monoolefinen, führen, die geringe in n-Heptan lösliche Anteile aufweisen; - wodurch z.B. die Klebneigung von Folien aus diesen Polymerisaten zurückgedrängt werden kann.

(g) Katalysatorsysteme, die vergleichsweise geringe Mengen an Aluminium enthaltender Komponente (2) benötigen; - wodurch sich z.B. Ablagerungen und Korrosionsschäden an Reaktorteilen vermindern lassen.

(h) Katalysatorsysteme, durch welche die morphologischen Eigenschaften der Polymerisate in bestimmter Weise beeinflußt werden, etwa im Sinne einer einheitlichen Korngröße und/oder einer Verminderung des Feinstkornanteils und/oder eines hohen Schüttgewichtes; - was für die technische Beherrschung der Polymerisationssysteme, die Aufbereitung der Polymerisate und/oder die Verarbeitbarkeit der Polymerisate von Bedeutung sein kann.

(i) Katalysatorsysteme, die bei der Copolymerisation von Ethylen mit höheren $\alpha$-Monoolefinen es vermögen, die letzteren in besonders hohen relativen Quantitäten in das Copolymerisat einzubauen; - was z.B. für die technische Beherrschung des Polymerisationsverfahrens, insbesondere beim Herstellen von Copolymerisaten mit Dichten (nach DIN 53 479) von $\leq 0{,}930$ g/cm$^3$, und/oder bei der Copolymerisation unter Verwendung von geradkettigen $C_4$-, $C_6$- bzw. $C_8$-$\alpha$-Monoolefinen als Comonomere von Wichtigkeit sein kann.

Nach den bisherigen Erfahrungen gibt es unter den mannigfachen Zielen etliche Ziele, die man durch besondere Ausgestaltung des Katalysatorsystems nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muß.

In diesem Rahmen lag auch die Aufgabenstellung, die zur vorliegenden Erfindung geführt hat: Eine neue Art Titan enthaltende Katalysatorkomponente (1) aufzuzeigen, mit der man gegenüber bekannten Titan enthaltenden Katalysatorkomponenten (1) - unter vergleichbarer Zielsetzung - bessere Ergebnisse erreichen kann, insbesondere was das vorgenannte Ziel (i) betrifft, das möglichst gut erreicht werden soll, bei zugleich gutem Erreichen auch der Ziele (a), (f) und (h).

Es wurde gefunden, daß die gestellte Aufgabe gelöst werden kann, wenn man bei dem eingangs definierten Polymerisationsverfahren ein Ziegler-Katalysatorsystem einsetzt, dessen Titan enthaltende Katalysatorkomponente (1) eine solche ist, bei deren Herstellung man in Stufe (1.2) eine Aluminiumkomponente (V) eingesetzt hat, die besteht aus (1.2.2.1) einer bestimmten Komplexverbindung aus einem spezifischen Ether von ausschließlich aliphatischer Natur und einer spezifischen organischen Aluminiumverbindung sowie (1.2.2.2) - gegebenenfalls - zusätzlich weiterer spezifischer organischer Aluminiumverbindung als solcher.

Gegenstand der vorliegenden Erfindung ist dementsprechend ein Verfahren zum Herstellen von Homopolymerisaten des Ethylens sowie insbesondere Copolymerisaten des Ethylens mit untergeordneten Mengen an $C_3$- bis $C_8$-, insbesondere $C_4$- bis $C_6$-$\alpha$-Monoolefinen durch Polymerisation des bzw. der Monomeren bei Temperaturen von 30 bis 200, insbesondere 50 bis 100°C, und Drücken von 1 bis 200, insbesondere 5 bis 60 bar, mittels eines Ziegler-Katalysatorsystems aus

(1) einer Titan enthaltenden Katalysatorkomponente und

(2) einer Aluminium enthaltenden Katalysatorkomponente der Formel

$AlR_3$,

worin steht

R für einen $C_1$- bis $C_{12}$-Kohlenwasserstoffrest, vorzugsweise eine $C_1$- bis $C_{12}$- und insbesondere eine $C_2$- bis $C_8$-Alkylgruppe,

mit den Maßgaben, daß (i) das Atomverhältnis Titan aus der Katalysatorkomponente (1) : Aluminium aus der Katalysatorkomponente (2) im Bereich von 1:5 bis 1:700, insbesondere 1:10 bis 1:500, liegt und (ii) als Titan enthaltende Katalysatorkomponente (1) eingesetzt wird das festphasige Produkt (VI), das erhalten worden ist, indem man

(1.1) zunächst

(1.1.1) einen feinteiligen, porösen, anorganisch-oxidischen Stoff (I), der einen Teilchendurchmesser

von 1 bis 1.000, insbesondere 10 bis 400µm, ein Porenvolumen von 0,3 bis 3, insbesondere 1 bis 2,5 $cm^3/g$ sowie eine Oberfläche von 100 bis 1.000, insbesondere 200 bis 400 $m^2/g$ besitzt und die Formel $SiO_2.aAl_2O_3$ - worin a steht für eine Zahl im Bereich von 0 bis 2, insbesondere 0 bis 0,5 - hat, und

(1.1.2) eine Lösung (II), wie sie sich ergibt beim Zusammenbringen von

(IIa) 100 Gew.-Teilen eines Alkohols der Formel
$R^1$ - OH,
worin steht
$R^1$ für einen gesättigten $C_1$- bis $C_8$-Kohlenwasserstoffrest, vorzugsweise einen gesättigten $C_1$- bis $C_6$-Kohlenwasserstoffrest, und insbesondere eine $C_1$- bis $C_4$-Alkylgruppe,

(IIb) 0,01 bis 6, insbesondere 0,04 bis 3,5 Gew.-Teilen (gerechnet als Titan) eines Titantrichlorids der Formel $TiCl_3.nAlCl_3$ - worin n steht für eine Zahl im Bereich von 0 bis 0,5, vorzugsweise 0,2 bis 0,4, und insbesondere 0,31 bis 0,35 -, sowie

(IIc) 0,01 bis 4, insbesondere 0,04 bis 2,5 Gew.-Teilen (gerechnet als Magnesium) Magnesiumchlorid ($MgCl_2$),

miteinander in Berührung bringt unter Bildung einer Dispersion (III), mit der Maßgabe, daß das Gewichtsverhältnis anorganisch-oxidischer Stoff (I) : Titan in dem Titantrichlorid (IIb) im Bereich von 1:0,01 bis 1:0,2 und das Gewichtsverhältnis anorganisch-oxidischer Stoff (I) : Magnesium in dem Magnesiumchlorid (IIc) im Bereich von 1:0,01 bis 1:0,25 liegt, die Dispersion (III) bei einer Temperatur, die unterhalb von 200, insbesondere unterhalb von 160°C, und oberhalb des Schmelzpunktes des verwendeten Alkohols (IIa) liegt, bis zur trockenen Konsistenz - Bildung eines festphasigen Zwischenproduktes (IV) - eindampft und

(1.2) dann
(1.2.1) das aus Stufe (1.1) erhaltene festphasige Zwischenprodukt (IV) und
(1.2.2) eine in einem inerten Kohlenwasserstoff gelöste Aluminiumkomponente (V), die neben Aluminium auch einen $C_1$- bis $C_{12}$-Kohlenwasserstoffrest, vorzugsweise eine $C_1$- bis $C_{12}$-, und insbesondere eine $C_2$- bis $C_8$-Alkylgruppe enthält,
miteinander in Berührung bringt unter Bildung einer Dispersion, wobei das dabei als Dispergiertes resultierende festphasige Produkt (VI) die Titan enthaltende Katalysatorkomponente (1) ist.

Das erfindungsgemäße Verfahren ist dadurch gekennzeichnet, daß als Titan enthaltende Katalysatorkomponente (1) eingesetzt wird das festphasige Produkt (VI), das aus Stufe (1.2) erhalten worden ist, indem man dort als Aluminiumkomponente (V) eingesetzt hat eine solche, die besteht

(1.2.2.1) zu 25 bis 100, vorzugsweise 35 bis 100, und insbesondere 50 bis 100 Mol.% aus einer in dem inerten Kohlenwasserstoff löslichen Komplexverbindung der Summenformel

$$R^2{-}O{-}R^3 \;\cdot\; R^4{-}\underset{\displaystyle R^6}{\underset{|}{Al}}{-}R^5$$

worin stehen:
$R^2$ sowie
$R^3$ für eine $C_1$- bis $C_{12}$-, insbesondere eine $C_2$- bis $C_6$-Alkylgruppe,
$R^4$ sowie
$R^5$ für einen $C_1$- bis $C_{12}$-Kohlenwasserstoffrest, vorzugsweise eine $C_1$- bis $C_{12}$-, und insbesondere eine $C_2$- bis $C_8$-Alkylgruppe und
$R^6$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_2$- bis $C_8$-Alkylgruppe oder Chlor,
sowie

(1.2.2.2) zu 0 bis 75, vorzugsweise 0 bis 65, und insbesondere 0 bis 50 Mol.% aus einer in dem inerten Kohlenwasserstoff löslichen Aluminiumverbindung der Formel

$$R^4{-}\underset{\displaystyle R^6}{\underset{|}{Al}}{-}R^5$$

worin stehen:
$R^4$ sowie
$R^5$ für einen $C_1$- bis $C_{12}$-Kohlenwasserstoffrest, vorzugsweise eine $C_1$- bis $C_{12}$-, und insbesondere eine $C_2$- bis $C_8$-Alkylgruppe und
$R^6$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_2$- bis $C_8$-Alkylgruppe oder Chlor,

mit den Maßgaben, daß (i) die Summe der Mol.% unter (1.2.2.1) und (1.2.2.2) 100 beträgt und (ii) das Atomverhältnis Titan in dem festphasigen Zwischenprodukt (IV) zu Aluminium in der Aluminiumkomponente (V) im Bereich von 1:1 bis 1:30, insbesondere 1:2 bis 1:20, liegt.

Beim Einsatz der erfindungsgemäß erhaltenen Titan enthaltenden Katalysatorkomponente (1) kann das Polymerisationsverfahren als solches in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren oder Trockenphasen-Polymerisationsverfahren im gerührten oder gewirbelten Bett. Die erwähnten technologischen Ausgestaltungen - mit anderen Worten: die technologischen Varianten der Polymerisation von Olefinen nach Ziegler - sind aus der Literatur und Praxis wohlbekannt, so daß sich nähere Ausführungen zu ihnen erübrigen. Zu bemerken ist allenfalls noch, daß die neue Titan enthaltende Katalysatorkomponente (1) - wie entsprechende bekannte Katalysatorkomponenten - z.B. außerhalb oder innerhalb des Polymerisationsgefäßes mit der Katalysatorkomponente (2) zusammengebracht werden kann; im letztgenannten Fall etwa durch räumlich getrennten Eintrag der Komponenten, die im übrigen in Form einer Suspension (Katalysatorkomponente (1)) bzw. Lösung (Katalysatorkomponente (2)) gehandhabt werden können.

Zu der neuen Titan enthaltenden Katalysatorkomponente (1) selbst ist das Folgende zu sagen:

Ihre Herstellung erfolgt in zwei Stufen, die oben sowie nachstehend mit (1.1) und (1.2) bezeichnet sind.

In Stufe (1.1) bringt man einen feinteiligen anorganisch-oxidischen Stoff (I) der oben definierten Art und eine bestimmte, oben definierte Lösung (II) miteinander in Berührung, wobei sich eine Dispersion (III) bildet, die bis zur trockenen Konsistenz - Bildung eines festphasigen Zwischenprodukts (IV) - eingedampft wird. In Stufe (1.2) wird letzteres mit einer Lösung einer bestimmten, oben definierten - und für die vorliegende Erfindung kennzeichnenden - Aluminiumkomponente (V) in Berührung gebracht unter neuerlicher Bildung einer Dispersion; wobei das dabei als Dispergiertes resultierende festphasige Produkt (VI) die neue Katalysatorkomponente (1) ist.

Im einzelnen kann man dabei wie folgt verfahren:

<u>Stufe (1.1)</u>

Der anorganisch-oxidische Stoff (I) wird als Substanz oder in einem Alkohol dispergiert (zweckmäßigerweise einem Alkohol wie er unter (IIa) definiert ist und mit einem Feststoffgehalt der Dispersion von nicht weniger als 5 Gew.%) mit der Lösung (II) vereinigt. Es ist günstig, nach der Vereinigung das Ganze während einer Zeitspanne von 5 bis 120, insbesondere 20 bis 90 Minuten auf einer Temperatur von 10 bis 160, insbesondere 20 bis 120°C zu halten und erst danach die gebildete Dispersion (III) einzudampfen.

Das Herstellen der Lösung (II) selbst kann so erfolgen, wie man üblicherweise Lösungen herstellt und ist insoweit nicht mit Besonderheiten verbunden. Als arbeitstechnisch zweckmäßig hat sich erwiesen, die Lösung (II) herzustellen durch Vereinigung einer Lösung aus dem Alkohol (IIa) und dem Titantrihalogenid (IIb) mit einer Lösung aus dem Alkohol (IIa) und dem Magnesiumchlorid (IIc).

Als abschließende Maßnahme bei Stufe (1.1) wird die Dispersion (III) bis zur trockenen Konsistenz eingedampft, wobei das festphasige Zwischenprodukt (IV) erhalten wird. Hierbei kann man - unter Einhaltung der oben gegebenen Temperaturbedingungen - so verfahren, wie man üblicherweise Dispersionen schonend eindampft. Dies bedeutet, daß es im allgemeinen zweckmäßig ist, das Eindampfen unter mehr oder minder stark erniedrigtem Druck vorzunehmen. Als Faustregel gilt, daß man das Paar Temperatur/Druck so wählen sollte, daß der Eindampfvorgang nach etwa 1 bis 10 Stunden beendet ist. Zweckmäßig ist es auch, das Eindampfen unter steter Wahrung der Homogenität des behandelten Gutes vorzunehmen; - wofür sich z.B. Rotationsverdampfer bewährt haben. Eine verbleibende Restmenge an Alkohol, etwa eine durch Komplexbildung gebundene Menge, ist für das festphasige Zwischenprodukt (IV) im allgemeinen ohne Schaden.

<u>Stufe (1.2)</u>

Man bereitet zunächst in getrennten Ansätzen eine 1- bis 20-, vorzugsweise etwa 10 gew.%ige Suspension des festphasigen Zwischenprodukts (IV) sowie eine 5- bis 80-, vorzugsweise etwa 10 gew.%ige Lösung der Aluminium komponente (V), wobei als Suspensions- bzw. Lösungsmittel inerte Kohlenwasserstoffe, vor allem relativ leichtsiedende Alkan-Kohlenwasserstoffe, wie Hexane, Heptane oder Benzine, verwendet werden. Danach vereinigt man die Suspension und die Lösung in solchen Mengenverhältnissen, daß das gewünschte Gewichtsverhältnis erreicht wird. Zur Vereinigung wird man im allgemeinen die Lösung in die Suspension unter Rühren einbringen, denn diese Verfahrensweise ist praktischer als die - ebenfalls mögliche - umgekehrte. Bei - zweckmäßigerweise nicht zu übersteigenden - Arbeitstemperaturen von 15 bis 60, insbesondere 25 bis 40°C, ist innerhalb einer Zeitspanne von 60 bis 300, insbesondere 90 bis 180 Minuten, die Bildung des - als Dispergiertes vorliegenden - festphasigen Produktes (VI) erfolgt. Dieses kann unmittelbar in Form der erhaltenen Dispersion - zweckmäßigerweise nach einer Wäsche durch Digerieren - als Titan enthaltende Katalysatorkomponente (1) verwendet werden. Im allgemeinen günstiger ist es aber, das festphasige Produkt (VI) zu isolieren und dann erst als Katalysatorkomponente (1) einzusetzen; - wobei sich zum Isolieren z.B. der folgende Weg anbietet: Man trennt das Produkt (VI) von der flüssigen Phase mittels Filtration und wäscht es mit reiner Flüssigkeit (etwa der Art, die man auch als Suspensions- bzw. Lösungsmittel verwendet hatte), worauf man es trocknet, etwa im Vakuum.

Sofern die in Stufe (1.2) einzusetzende Aluminiumkomponente (V) nicht nur aus (1.2.2.1) der oben definierten löslichen Komplexverbindung

$$R^2{-}O{-}R^3 \cdot R^4{-}\underset{\displaystyle R^6}{\underset{|}{Al}}{-}R^5$$

sondern auch zusätzlich (1.2.2.2) der oben definierten löslichen Aluminiumverbindung

$$R^4{-}\underset{\displaystyle R^6}{\underset{|}{Al}}{-}R^5$$

als solcher besteht, kann man das aus Stufe (1.1) erhaltene Zwischenprodukt (IV) mit einer gemeinsamen Lösung der Komplex- sowie der Aluminiumverbindung behandeln oder - was im allgemeinen vorteilhafter ist - nacheinander zunächst mit einer Lösung der Komplexverbindung und dann mit einer Lösung der Aluminiumverbindung.

Die neuen Titan enthaltenden Katalysatorkomponenten (1), d.h. die festphasigen Produkte (VI), lassen sich im Rahmen des eingangs dargelegten Polymerisationsverfahrens zum Herstellen der dort genannten Polymerisate so einsetzen, wie man üblicherweise die Titan enthaltenden Verbindungen bei der Polymerisation von Olefinen nach Ziegler einsetzt. Insoweit sind also keine Besonderheiten gegeben, und es kann auf die aus Literatur und Praxis wohlbekannten Einsatzweisen verwiesen werden. - Es ist lediglich noch zu sagen, daß die neuen Katalysatorkomponenten (1) sich vornehmlich zum Herstellen von Copolymerisaten des Ethylens eignen und daß als Copolymerisationspartner neben Propen und Octen-1 vor allem Buten-1, 4-Methylpenten-1 und Hexen-1 in Betracht kommen. Die Regelung der Molekulargewichte der Polymerisate kann in einschlägig üblicher Weise erfolgen, insbesondere mittels Wasserstoff als Regulans.

Was die stoffliche Seite der neuen Titan enthaltenden Katalysatorkomponenten (1) betrifft, ist im einzelnen noch das Folgende zu sagen:

Der in Stufe (1.1) einzusetzende anorganisch-oxidische Stoff (I) wird im allgemeinen ein Alumosilikat oder - insbesondere - ein Siliciumdioxid sein; wichtig ist, daß der Stoff die geforderten Eigenschaften besitzt und möglichst trocken ist. Besonders gut geeignete anorganisch-oxidische Stoffe sind solche, die gemäß der ersten Stufe (1) des in der GB-PS 1 550 951 beschriebenen Verfahrens erhalten werden, insbesondere dann, wenn dabei von Hydrogelen ausgegangen wird, die nach dem in der GB-PS 1 368 711 beschriebenen Verfahren erhalten werden.

Die einzusetzenden Alkohole (IIa) können z.B. sein: Methanol, Ethanol, Isopropanol, n-Propanol, eines der drei isomeren Butanole oder ein Hexanol, wie n-Hexanol. Die Alkohole (IIa) können eingesetzt werden in Form von Einzelindividuen sowie Gemischen aus zwei oder mehr Einzelindividuen.

Das einzusetzende Titantrichlorid (IIb) kann ein bei Ziegler-Katalysatorsystemen übliches sein, z.B. ein bei der Reduktion von Titantetrachlorid mittels Wasserstoff, Aluminium oder aluminiumorganischen Verbindungen erhaltenes Reaktionsprodukt. Als besonders gut geeignet haben sich erwiesen Trichloride der Formel $TiCl_3$, wie sie bei der Reduktion von Titantetrachlorid mittels Wasserstoff anfallen sowie Trichloride der Formel $TiCl_3 \cdot {}_{1/3}\,AlCl_3$, wie sie bei der Reduktion von Titantetrachlorid mittels metallischem Aluminium anfallen. Die Titantrichloride können eingesetzt werden in Form von Einzelindividuen sowie Gemischen aus zwei oder mehr Einzelindividuen.

Die ebenfalls in Stufe (1.1) einzusetzende Magnesiumverbindung (IIc) ist Magnesiumchlorid ($MgCl_2$).

Die in Stufe (1.2) einzusetzende Aluminiumkomponente (V) besteht erfindungsgemäß

(1.2.2.1) zu 25 bis 100, vorzugsweise 35 bis 100, und insbesondere 50 bis 100 Mol.% aus einer in dem inerten Kohlenwasserstoff löslichen Komplexverbindung der Summenformel

$$R^2{-}O{-}R^3 \cdot R^4{-}\underset{\displaystyle R^6}{\underset{|}{Al}}{-}R^5$$

worin stehen:

$R^2$ sowie

$R^3$ für eine $C_1$- bis $C_{12}$-, insbesondere eine $C_2$- bis $C_6$-Alkylgruppe,

$R^4$ sowie

$R^5$ für einen $C_1$- bis $C_{12}$-Kohlenwasserstoffrest, vorzugsweise eine $C_1$- bis $C_{12}$-, und insbesondere eine $C_2$- bis $C_8$-Alkylgruppe und

$R^6$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_2$- bis $C_8$-Alkylgruppe oder Chlor,
sowie

(1.2.2.2) zu O bis 75, vorzugsweise O bis 65, und insbesondere O bis 5O Mol.% aus einer in dem inerten Kohlenwasserstoff löslichen Aluminiumverbindung der Formel

$$R^4{-}\underset{\substack{|\\ R^6}}{Al}{-}R^5$$

worin stehen:
$R^4$ sowie
$R^5$ für einen $C_1$- bis $C_{12}$-Kohlenwasserstoffrest, vorzugsweise eine $C_1$- bis $C_{12}$-, und insbesondere eine $C_2$- bis $C_8$-Alkylgruppe und
$R^6$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_2$- bis $C_8$-Alkylgruppe oder Chlor,

mit der Maßgabe, daß die Summe der Mol.% unter (1.2.2.1) und (1.2.2.2) 1OO beträgt.

Bei den Komplexverbindungen eignen sich - jeweils unter Wahrung der oben unter (1.2.2.1) gegebenen Rangfolge - z.B. die folgenden Aufbaupartner:

(i) Seitens der Ether von ausschließlich aliphatischer Natur der Di-ethylether, Di-i-propylether, Di-n-butylether, Di-n-hexylether, Ethyl-n-butylether, Ethyl-i-propylether, Di-i-amylether, Di-i-butylether, Di-n-propylether, Di-t-butylether sowie der Di-neopentylether.
Die Ether können vorliegen in Form von Einzelindividuen sowie Gemischen aus zwei oder mehr Einzelindividuen.

(ii) Seitens des aluminiumorganischen Teils vor allem Diethylaluminiumchlorid sowie auch Triethylaluminium und Triisobutylaluminium.
Auch diese Aufbaupartner können vorliegen in Form von Einzelindividuen sowie Gemischen aus zwei oder mehr Einzelindividuen.

Die Komplexverbindungen als solche sind ihrer Art nach bekannt; eine gut geeignete Methode zu ihrer Herstellung ist z.B. gegeben durch E.B. Baker und H.H. Sisler in Am.Soc. 75, 4828 (1953).

Als Aluminium enthaltende Komponente (2) des erfindungsgemäß einzusetzenden Ziegler-Katalyatorsystems kommen die einschlägig üblichen, der oben gegebenen Formel gehorchenden in Betracht; sie sind aus Literatur und Praxis so wohlbekannt, daß auf sie nicht näher eingegangen zu werden braucht. Als herausragende Vertreter seien beispielsweise genannt Triethylaluminium, Tri-isobutylaluminium und Tri-n-butylaluminium.

Abschließend ist noch zu bemerken, daß die erfindungsgemäßen Titan enthaltenden Katalysatorkomponenten (1), d.h. die Produkte (VI) empfindlich gegen hydrolytische sowie oxidative Einflüsse sind. Insoweit sollte man beim Umgang mit diesen Substanzen also die für Ziegler-Katalysatoren einschlägig üblichen Vorsichtsmaßnahmen treffen (z.B. Feuchtigkeitsausschluß, Inertgasatmosphäre).

Beispiel 1

Herstellen der Titan enthaltenden Katalysatorkomponente (1)

(1.1) Zunächst verfährt man in einer ersten Stufe so, daß man

(1.1.1) einen feinteiligen, porösen, anorganisch-oxidischen Stoff (I), der einen Teilchendurchmesser von 5O bis 2OOµm, ein Porenvolumen von 1,9 $cm^3/g$ sowie eine Oberfläche von 28O $m^2/g$ besitzt und die Formel $SiO_2$ hat, und

(1.1.2) eine Lösung (II), wie sie sich ergibt beim Zusammenbringen von

(IIa) 1OO Gew.-Teilen Methanol,

(IIb) O,8 Gew.-Teilen (gerechnet als Titan) eines Titantrichlorids der Formel $TiCl_3.nAlCl_3$ - worin n steht für die Zahl O,33 -, sowie

(IIc) 1,5 Gew.-Teilen (gerechnet als Magnesium) Magnesiumchlorid ($MgCl_2$),

unter Rühren über eine Stunde bei einer Temperatur von 4O°C miteinander in Berührung bringt unter Bildung einer Dispersion (III), mit der Maßgabe, daß das Gewichtsverhältnis anorganisch-oxidischer Stoff (I) : Titan in dem Titantrichlorid (IIb) 1:O,O4 und das Gewichtsverhältnis anorganisch-oxidischer Stoff (I) : Magnesium in dem Magnesiumchlorid (IIc) 1:O,O75 beträgt, und die Dispersion (III) mittels eines Rotationsverdampfers, der bis zu einem Betriebsdruck von 3O Torr und einer Betriebstemperatur von 7O°C gebracht wird, bis zur trockenen Konsistenz - Bildung eines festphasigen Zwischenproduktes (IV) - eindampft.

Dieses Zwischenprodukt (IV) enthält 2,1 Gew.% Titan.

(1.2) Dann verfährt man in einer zweiten Stufe so, daß man
(1.2.1) 100 Gew.-Teile des aus Stufe (1.1) erhaltenen festphasigen Zwischenprodukts (IV) und
(1.2.2) eine in 280 Gew.-Teilen n-Heptan gelöste Aluminiumkomponente (V), die besteht
(1.2.2.1) zu 55 Mol.% aus einer (in dem n-Heptan löslichen) Komplexverbindung der Summenformel

$$R^2\text{-O-}R^3 \cdot R^4\text{-Al}(R^6)\text{-}R^5$$

worin stehen:
$R^2$ sowie
$R^3$ für eine Isoamylgruppe,
$R^4$ sowie
$R^5$ für eine Ethylgruppe und
$R^6$ für Chlor,
sowie
(1.2.2.2) zu 45 Mol.% aus einer (in dem n-Heptan) löslichen Aluminiumverbindung der Formel

$$R^4\text{-Al}(R^6)\text{-}R^5$$

worin stehen:
$R^4$ sowie
$R^5$ für eine Ethylgruppe und
$R^6$ für Chlor,
unter Rühren über zwei Stunden bei einer Temperatur von 35°C - mit der Maßgabe, daß das Atomverhältnis Titan in dem festphasigen Zwischenprodukt (IV) zu Aluminium in der Aluminiumkomponente (V) 1:14 beträgt - miteinander in Berührung bringt unter Bildung einer Dispersion, wobei das dabei als Dispergiertes resultierende festphasige Produkt (VI) die Titan enthaltende Katalysatorkomponente (1) ist.

Letztere wird durch Absaugen isoliert, mehrmals mit n-Heptan gewaschen und getrocknet; sie enthält 1,3 Gew.% Titan.

Polymerisation mittels der vorstehend beschriebenen Katalysatorkomponente (1)

Ein 1 l Autoklav wird mit 250 ml Isobutan, 120 ml Buten, 28,5 mg der Katalysatorkomponente (1) sowie 88 mg Triethylaluminium als Katalysatorkomponente (2) beschickt (entsprechend einem Atomverhältnis Titan aus der Katalysatorkomponente (1) : Aluminium aus der Katalysatorkomponente (2) von 1:100). Sodann wird unter Rühren und bei den - jeweils durch Regelung konstant gehaltenen - Parametern: Ethylenpartialdruck 15 bar, Wasserstoffpartialdruck 1,2 bar, Temperatur 75°C, über eine Zeitspanne von 1,5 Stunden polymerisiert; danach wird die Polymerisation durch Entspannen des Autoklaven abgebrochen.

Nähere Angaben zu dem Verfahrensprodukt finden sich in der untenstehenden Tabelle.

Beispiel 2

Herstellen der Titan enthaltenden Katalysatorkomponente (1)

Es erfolgt wie in Beispiel 1, mit der einzigen Ausnahme, daß in der zweiten Stufe (1.2) unter (1.2.2.1) eingesetzt wird die gleich Molmenge einer (in dem n-Heptan löslichen) Komplexverbindung der Summenformel

$$R^2\text{-O-}R^3 \cdot R^4\text{-Al}(R^6)\text{-}R^5$$

worin stehen:
$R^2$ sowie
$R^3$ für eine n-Butylgruppe,
$R^4$ sowie
$R^5$ für eine Ethylgruppe und
$R^6$ für Chlor.

Polymerisation mittels der vorstehend umrissenen Katalysatorkomponente (1).

Sie erfolgt wie in Beispiel 1, mit der einzigen Ausnahme, daß als Katalysatorkomponente (1) eingesetzt wird die gleiche Menge (gerechnet als Titan) der oben umrissenen Katalysatorkomponente (1).

Nähere Angaben zu dem dabei erhaltenen Verfahrensprodukt finden sich ebenfalls in der nachstehenden Tabelle.

| Beispiel Nr. | Produktivität[1)] | Schüttdichte[2)] | Schmelzindex[3)] | Dichte[4)] | lösl. Anteile[5)] |
|---|---|---|---|---|---|
| 1 | 5.430 | 0,330 | 0,95 | 0,9215 | 1,5 |
| 2 | 8.900 | 0,360 | 0,8 | 0,921 | 1,2 |

[1)] in g Polymerisat pro g Titan enthaltender Katalysatorkomponente (1)
[2)] in g/$cm^3$ nach DIN 53 468
[3)] MFI 190/2,16 in g/10 min nach DIN 53 735
[4)] in g/$cm^3$ nach DIN 53 479
[5)] in % des Polymerisats bei 1 g Polymerisat in 5 g n-Heptan bei 20°C innerhalb von 2 Stunden

## Patentansprüche

Verfahren zum Herstellen von Homopolymerisaten des Ethylens sowie Copolymerisaten des Ethylens mit untergeordneten Mengen an $C_3$-bis $C_8$-α-Monoolefinen durch Polymerisation des bzw. der Monomeren bei Temperaturen von 30 bis 200°C, und Drücken von 1 bis 200 bar, mittels eines Ziegler-Katalysatorsystems aus

(1) einer Titan enthaltenden Katalysatorkomponente und
(2) einer Aluminium enthaltenden Katalysatorkomponente der Formel
$AlR_3$,
worin steht
R für einen $C_1$- bis $C_{12}$-Kohlenwasserstoffrest,

mit den Maßgaben, daß (i) das Atomverhältnis Titan aus der Katalysatorkomponente (1) : Aluminium aus der Katalysatorkomponente (2) im Bereich von 1:5 bis 1:700 liegt und (ii) als Titan enthaltende Katalysatorkomponente (1) eingesetzt wird das festphasige Produkt (VI), das erhalten worden ist, indem man

(1.1) zunächst
(1.1.1) einen feinteiligen, porösen, anorganisch-oxidischen Stoff (I), der einen Teilchendurchmesser von 1 bis 1.000µm, ein Porenvolumen von 0,3 bis 3 $cm^3$/g sowie eine Oberfläche von 100 bis 1.000 $m^2$/g besitzt und die Formel $SiO_2.aAl_2O_3$ - worin a steht für eine Zahl im Bereich von 0 bis 2 - hat, und
(1.1.2) eine Lösung (II), wie sie sich ergibt beim Zusammenbringen von

(IIa) 100 Gew.-Teilen eines Alkohols der Formel
$R^1$ - OH,
worin steht
$R^1$ für einen gesättigten $C_1$- bis $C_8$-Kohlenwasserstoffrest,
(IIb) 0,01 bis 6 Gew.-Teilen (gerechnet als Titan) eines Titantrichlorids der Formel $TiCl_3.nAlCl_3$ - worin n steht für eine Zahl im Bereich von 0 bis 0,5 -, sowie
(IIc) 0,01 bis 4 Gew.-Teilen (gerechnet als Magnesium) Magnesiumchlorid ($MgCl_2$),

miteinander in Berührung bringt unter Bildung einer Dispersion (III), mit der Maßgabe, daß das Gewichtsverhältnis anorganisch-oxidischer Stoff (I) : Titan in dem Titantrichlorid (IIb) im Bereich von 1:0,01 bis 1:0,2 und das Gewichtsverhältnis anorganisch-oxidischer Stoff (I) : Magnesium in dem Magnesiumchlorid (IIc) im Bereich von 1:0,01 bis 1:0,25 liegt, die Dispersion (III) bei einer Temperatur, die unterhalb von 200°C, und oberhalb des Schmelzpunktes des verwendeten Alkohols (IIa) liegt, bis zur trockenen Konsistenz - Bildung eines festphasigen Zwischenproduktes (IV) - eindampft und

(1.2) dann
(1.2.1) das aus Stufe (1.1) erhaltene festphasige Zwischenprodukt (IV) und
(1.2.2) eine in einem inerten Kohlenwasserstoff gelöste Aluminiumkomponente (V), die neben Aluminium auch einen $C_1$- bis $C_{12}$-Kohlenwasserstoffrest enthält,
miteinander in Berührung bringt unter Bildung einer Dispersion, wobei das dabei als Dispergiertes resultierende festphasige Produkt (VI) die Titan enthaltende Katalysatorkomponente (1) ist,

dadurch gekennzeichnet, daß als Titan enthaltende Katalysatorkomponente (1) eingesetzt wird das festphasige Produkt (VI), das aus Stufe (1.2) erhalten worden ist, indem man dort als Aluminiumkomponente (V) eingesetzt hat eine solche, die besteht
(1.2.2.1) zu 25 bis 100 Mol.% aus einer in dem inerten Kohlenwasserstoff löslichen Komplexverbindung der Summenformel

$$R^2{-}O{-}R^3 \cdot R^4{-}\underset{\displaystyle R^6}{\underset{|}{Al}}{-}R^5$$

worin stehen:
$R^2$ sowie
$R^3$ für eine $C_1$- bis $C_{12}$-Alkylgruppe,
$R^4$ sowie
$R^5$ für einen $C_1$- bis $C_{12}$-Kohlenwasserstoffrest und
$R^6$ für einen $C_1$- bis $C_{12}$-Kohlenwasserstoffrest oder Chlor
sowie
(1.2.2.2) zu O bis 75 Mol.% aus einer in dem inerten Kohlenwasserstoff löslichen Aluminiumverbindung der Formel

$$R^4{-}\underset{\displaystyle R^6}{\underset{|}{Al}}{-}R^5$$

worin stehen:
$R^4$ sowie
$R^5$ für einen $C_1$- bis $C_{12}$-Kohlenwasserstoffrest und
$R^6$ für einen $C_1$- bis $C_{12}$-Kohlenwasserstoffrest oder Chlor,

mit den Maßgaben, daß (i) die Summe der Mol.% unter (1.2.2.1) und (1.2.2.2) 1OO beträgt und (ii) das Atomverhältnis Titan in dem festphasigen Zwischenprodukt (IV) zu Aluminium in der Aluminiumkomponente (V) im Bereich von 1:1 bis 1:3O liegt.

## Claims

A process for the preparation of homopolymers of ethylene and copolymers of ethylene with minor amounts of $C_3$–$C_8$-α-monoolefins by polymerization of the monomer or monomers at from 30 to 200°C and under from 1 to 200 bar using a Ziegler catalyst system consisting of

(1) a titanium-containing catalyst component and
(2) an aluminium-containing catalyst component of the formula
$AlR_3$,
where R is a $C_1$–$C_{12}$-hydrocarbon radical,

with the provisos that (i) the atomic ratio of titanium from catalyst component (1) to aluminium from catalyst component (2) is from 1:5 to 1:700 and (ii) the titantium-containing catalyst component (1) used is the solid-phase product (VI) obtained by a procedure in which

(1.1) first
(1.1.1) a finely divided, porous, inorganic oxidic substance (I) which has a particle diameter of from 1 to 1,000 µm, a pore volume of from 0.3 to 3 $cm^3/g$ and a specific surface area of from 100 to 1,000 $m^2/g$ and is of the formula $SiO_2.aAl_2O_3$, where a is from 0 to 2, and
(1..1.2) a solution (II), as obtained by combining

(IIa) 100 parts by weight of an alcohol of the formula $R^1$–OH, where
$R^1$ is a saturated $C_1$–$C_8$-hydrocarbon radical,
(IIb) from 0.01 to 6 parts by weight (calculated as titanium) of a titanium trichloride of the formula $TiCL_3.nAlCl_3$, where n is from 0 to 0.5, and
(IIc) from 0.01 to 4 parts by weight (calculated as magnesium) of magnesium chloride ($MgCl_2$),

are brought into contact with one another with the formation of a dispersion (III), with the proviso that the weight ratio of inorganic oxidic substance (I) to titanium in the titanium trichloride (IIb) is from 1:0.01 to 1:0.2 and the weight ratio of inorganic oxidic substance (I) to magnesium in the magnesium chloride (IIc) is from 1:0.01 to 1:0.25, the dispersion (III) is evaporated to dryness at below 200°C and above the melting point of the alcohol (IIa) used, with the formation of a solid-phase intermediate (IV), and

(1.2) then
(1.2.1) the solid-phase intermediate (IV) obtained in stage (1.1) and
(1.2.2) an aluminium component (V) which is dissolved in an inert hydrocarbon and contains not only

aluminium but also a $C_1$–$C_{12}$-hydrocarbon radical are brought into contact with one another with the formation of a dispersion, the solid-phase product (VI) obtained as the dispersion substance being the titanium-containing catalyst component (1), wherein the titanium-containing catalyst component (1) used is the solid-phase product (VI) obtained in stage (1.2) by using in the said stage, as the aluminium component (V), one which consists of

(1.2.2.1) from 25 to 100 mol% of a complex compound which is soluble in the inert hydrocarbon and is of the empirical formula

$$R^2\text{-}O\text{-}R^3 \cdot R^4\text{-}\underset{\substack{| \\ R^6}}{Al}\text{-}R^5$$

where
$R^2$ and $R^3$ are each $C_1$–$C_{12}$-alkyl,
$R^4$ and $R^5$ are each a $C_1$–$C_{12}$-hydrocarbon radical and
$R^6$ is a $C_1$–$C_{12}$-hydrocarbon radical or chlorine, and

(1.2.2.2) from 0 to 75 mol% of an aluminium compound which is soluble in the inert hydrocarbon and is of the formula

$$R^4\text{-}\underset{\substack{| \\ R^6}}{Al}\text{-}R^5$$

where
$R^4$ and $R^5$ are each a $C_1$–$C_{12}$-hydrocarbon radical and
$R^6$ is a $C_1$–$C_{12}$-hydrocarbon radical or chlorine,

with the provisos that (i) the sum of the mol% under (1.2.2.1) and (1.2.2.2) is 100 and (ii) the atomic ratio of titanium in the solid-phase intermediate (IV) to aluminium in the aluminium component (V) is from 1:1 to 1:30.

**Revendications**

Procédé de préparation d'homopolymères d'éthylène ainsi que de copolymères d'éthylène avec de faibles quantités d'$\alpha$-monooléfines en $C_3$–$C_8$ par polymérisation du ou des monomères à des températures de 30 à 200°C et des pressions de 1 à 200 bar, à l'aide d'un système catalyseur Ziegler composé de

(1) un composant de catalyseur contenant du titane, et
(2) un composant de catalyseur contenant de l'aluminium de formule
$AlR_3$ où
R est mis pour un reste hydrocarboné en $C_1$–$C_{12}$,

pourvu que (i) le rapport atomique du titane du composant de catalyseur (1) à l'aluminium du composant de catalyseur (2) soit dans l'intervalle de 1:5 à 1:700 et (ii) on mette en réaction comme composant de catalyseur contenant du titane le produit solide (VI) qui a été préparé de la façon suivante

(1.1) en premier lieu on met en contact l'un avec l'autre avec formation d'une dispersion (III)
(1.1.1) une substance oxydée inorganique (I) poreuse et finement divisée qui présente un diamètre de particules de 1 à 1000 µm, un volume de pores de 0,3 à 3 $cm^3$/g ainsi qu'une surface spécifique de 100 à 1000 $m^2$/g et qui a la formule $SiO_2.aAl_2O_3$ où a est mis pour un nombre compris entre 0 et 2, et
(1.1.2) une solution (II), comme elle se présente par mélange de

(IIa) 100 parties en poids d'un alcool de formule $R^1$–OH où $R^1$ est mis pour un reste hydrocarboné en $C_1$–$C_8$ saturé
(IIb) 0,01 à 6 parties en poids (calculées en titane) d'un trichlorure de titane de formule $TiCl_3.nAlCl_3$ où n est mis pour un nombre compris entre 0 et 0,5, ainsi que
(IIc) 0,01 à 4 parties en poids (calculés en magnésium) de chlorure de magnésium $MgCl_2$,

avec la condition que le rapport pondéral de la substance oxydée inorganique (I) au titane dans le trichlorure de titane (IIb) soit dans l'intervalle de 1:0,01 à 1:0,2 et le rapport pondéral de la substance oxydée inorganique (I) au magnésium dans le chlorure de magnésium (IIc) soit dans l'intervalle de 1:0,01 à 1:0,25, on évapore la dispersion (III) à une température qui se trouve en-dessous de 200°C et au-dessus du point de fusion de l'alcool utilisé (IIa), jusqu'à une consistance sèche – formation d'un produit intermédiaire (I) solide –, et

(1.2) On met ensuite en contact l'un avec l'autre avec formation d'une dispersion
(1.2.1) le produit intermédiaire (IV) obtenu dans l'étape (1.1) et
(1.2.2) un composé de l'aluminium (V) dissous dans un hydrocarbure inerte, qui contient outre l'aluminium un reste hydrocarboné en $C_1$–$C_{12}$, le produit solide (VI) résultant sous forme de produit dispersé étant le composant de catalyseur contenant du titane (1), caractérisé en ce que, comme composant de catalyseur contenant du titane (1), on utilise le produit solide (VI) qui a été obtenu dans l'étape (1.2) dans laquelle on a utilisé comme composé de l'aluminium (V) un tel composé qui est constitué
(1.2.2.1) pour 25 à 100% en moles d'un complexe soluble dans l'hydrocarbure inerte de formule brute

$$R^2-O-R^3 \cdot R^4Al(R^6)-R^5$$

dans laquelle
$R^2$ ainsi que
$R^3$ sont mis pour un groupement alkyle en $C_1$–$C_{12}$
$R^4$ ainsi que
$R^5$ sont mis pour un reste hydrocarboné en $C_1$–$C_{12}$, et
$R^6$ est mis pour un reste hydrocarboné en C–C12 ou un atome de chlore ainsi que
(1.2.2.2) pour 0 à 75% en moles d'un composé de l'aluminium soluble dans l'hydrocarbure inerte de formule

$$R^4-Al(R^6)-R^5$$

dans laquelle
$R^4$ ainsi que
$R^5$ sont mis pour un reste hydrocarboné en $C_1$–$C_{12}$, et
$R^6$ est mis pour un reste hydrocarboné en $C_1$–$C_{12}$ ou un atome de chlore

avec les conditions que (i) la somme des % en moles sous (1.2.2.1) et (1.2.2.2) s'élève à 100 et (ii) le rapport atomique du titane dans le produit intermédiaire (IV) solide à l'aluminium dans le composé de l'aluminium (V) soit dans l'intervalle de 1:1 à 1:30.